# EUROPÄISCHE PATENTSCHRIFT

(11) **EP 2 978 778 B1**
(45) Veröffentlichungstag und Bekanntmachung des Hinweises auf die Patenterteilung: **22.01.2020**
(21) Anmeldenummer: 14710234.7
(22) Anmeldetag: 12.03.2014
(51) Int. Cl.: C08F 6/22, C08J 7/00, C08J 9/00, C08G 18/82, C09J 7/30, C08J 3/16, C08F 220/10, C08J 9/32, C09J 133/08, C08L 33/08, C09J 7/21

(54) **VERFAHREN ZUR KOAGULATION VON POLYMERDISPERSIONEN MITTELS EXPANDIERBARER MIKROSPHÄREN**
METHOD FOR COAGULATING POLYMER DISPERSIONS USING EXPANDABLE MICROSPHERES
PROCÉDÉ DE COAGULATION DE DISPERSIONS POLYMÈRES À L'AIDE DE MICROSPHÈRES EXPANSIBLES

(30) Priorität: 28.03.2013 EP 13161695
(43) Veröffentlichungstag der Anmeldung: 03.02.2016
(73) Patentinhaber: BASF SE, 67056 Ludwigshafen am Rhein (DE)
(72) Erfinder: PIETSCH, Ines, 67346 Speyer (DE); HECKHOFF, Lars, 69517 Gorxheimertal (DE); RANFT, Meik, 64625 Bensheim (DE); SCHULER, Peter, 67071 Ludwigshafen (DE); KUNTZ, Andrea, 69123 Heidelberg (DE)
(74) Vertreter: BASF IP Association
(86) Internationale Anmeldenummer: PCT/EP2014/054797
(87) Internationale Veröffentlichungsnummer: WO 2014/154483

(56) Entgegenhaltungen:
- EP-A2- 0 740 264
- WO-A1-94/19400
- WO-A1-95/20020
- US-B1- 6 740 373

## Beschreibung

Die Erfindung betrifft ein Verfahren zur Koagulation einer wässrigen Polymerdispersion, wobei die wässrige Polymerdispersion in wässriger Phase dispergiertes Polymer sowie thermisch expandierbare, thermoplastische Mikrosphären enthält, die Polymerdispersion durch Energieeintrag koaguliert wird, und die koagulierte Masse über eine Ausbringöffnung ausgetragen wird.

Wässrige Klebstoffe, z.B. Laminier- und Haftklebstoffe, werden in industriellem Maßstab auf kontinuierlichen Beschichtungsanlagen verarbeitet. Dabei werden die wässrigen Klebstoffe mit einem geeigneten Beschichtungssystem auf einen schnell laufenden bahnförmigen Träger, z. B. aus Papier oder einem thermoplastischen Polymer (Polymerfolie), in der gewünschten Schichtstärke aufgebracht. Danach muss möglichst schnell eine Trocknung erfolgen. Der beschichtete Träger durchläuft dazu mit der gleichen Geschwindigkeit eine Trockenapparatur. Nach der Trocknung wird der Träger im Allgemeinen aufgewickelt und später zu selbstklebenden Artikeln weiterverarbeitet, insbesondere bedruckt und zugeschnitten. Für die Trocknung ist eine sehr große Wärmemenge notwendig. Während der Trocknung verfilmt das Bindemittel zu einem geschlossenen Polymerfilm; die Dauer der Trocknung und auch die Trocknungsbedingungen beeinflussen die Qualität des erhaltenen Polymerfilms und somit auch die späteren anwendungstechnischen Eigenschaften der selbstklebenden Artikel.

Schmelzklebstoffe, so genannte Hotmelts, enthalten keine Lösungsmittel und kein Wasser. Es handelt sich um sogenannte 100%-Systeme. Ein Schmelzklebstoff ist ohne chemische Nachvernetzung naturgemäß nur bis maximal zu seiner Erstarrungstemperatur wärmebeständig und die Klebekräfte sind ohne Nachvernetzung begrenzt. Diese Nachteile können zwar durch Nachvernetzung z.B. mittels Epoxidvernetzern oder Isocyanatvernetzern oder durch Einsatz von UV-vernetzbaren Schmelzklebstoffen umgangen werden, allerdings erfordert eine Nachvernetzung einen erhöhten apparativen und/oder zeitlichen Aufwand.

Aufgabe der vorliegenden Erfindung war daher, ein Verfahren zur Verfügung zu stellen, welches die jeweils spezifischen Vorteile eines Einsatzes von Schmelzklebstoffen einerseits und Dispersionsklebstoffen andererseits möglichst vereinigt und das gleichzeitig die jeweiligen spezifischen Nachteile möglichst minimiert. Aufgabe der vorliegenden Erfindung war daher insbesondere, ein Verfahren zum Auftragen von Klebstoffsystemen basierend auf wässrigen Polymerdispersionen zur Verfügung zu stellen, wobei die Polymerdispersionen gezielt zur Koagulation gebracht werden können, jedoch trotzdem keine Stabilitätsprobleme während der Synthese aufweisen, d.h. bis zur Anwendung stabil gegenüber vorzeitiger Koagulation sind. Durch die gezielte Koagulation der Polymerdispersion sollen Klebekräfte möglichst ähnlich schnell wie bei einem Hotmelt-System aufgebaut werden.

Überraschenderweise wurde gefunden, dass mit dem unten näher beschriebenen Verfahren durch Koagulation, vorzugsweise in einer beheizbaren Düse, ein Polymerstrang erzeugt werden kann, der ähnliche Klebeeigenschaften wie ein herkömmlich erzeugter und getrockneter Klebstofffilm aufweist, jedoch die Klebkraft in deutlich kürzerer Zeit aufgebaut wird.

Gegenstand der Erfindung ist ein Verfahren zur Koagulation einer wässrigen Polymerdispersion, wobei
- eine wässrige Polymerdispersion zur Verfügung gestellt wird, welche mindestens ein in wässriger Phase dispergiertes Polymer sowie thermisch expandierbare, thermoplastische Mikrosphären enthält,
- die Polymerdispersion durch Energieeintrag koaguliert wird, und
- die koagulierte Masse über eine Ausbringöffnung, vorzugsweise in Form einer Düse, ausgetragen wird.

Der Energieeintrag zur Koagulation erfolgt thermisch oder sowohl thermisch als auch durch Scherung. Wichtiger Bestandteil einer Beschichtungs- oder Klebemasse (zusammenfassend im Folgenden auch Beschichtungsmasse genannt) ist das Binde- oder Klebemittel (zusammenfassend im Folgenden auch Bindemittel genannt). Die wässrige Beschichtungsmasse enthält vorzugsweise eine wässrige Polymerdispersion als Bindemittel. Der Gehalt an Polymer (Bindemittel) in der wässrigen Dispersion beträgt vorzugsweise 20 bis 70 Gew.%, insbesondere 50 bis 65 Gew. %.

Insbesondere ist das in der wässerigen Dispersion dispergierte Polymer durch Polymerisation von radikalisch polymerisierbaren Verbindungen (Monomere) erhältlich oder es handelt es sich um durch Polykondensation erhältliche Polymere wie z.B. Polyurethane. Vorzugsweise wird die wässrige Polymerdispersion durch Emulsionspolymerisation hergestellt. Bei dem in der wässrigen Dispersion dispergierten Polymer handelt es sich daher vorzugsweise um ein Emulsionspolymerisat.

Im Folgenden sind der Ausdruck (Meth)acryl... und ähnliche Ausdrücke eine abkürzende Schreibweise für "Acryl- oder Methacryl-".

Vorzugsweise besteht das Polymer zu mindestens 40 Gew.-%, besonders bevorzugt zu mindestens 60 Gew.-%, ganz besonders bevorzugt zu mindestens 80 Gew.-% aus sogenannten Hauptmonomeren. Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren. Vorzugsweise besteht das dispergierte Polymer zu mehr als 40 Gew. % aus C₁-C₂₀ Alkyl(meth)acrylaten.

Zu nennen sind z. B. (Meth)acrylsäurealkylester mit einem C₁-C₁₀-Alkylrest, wie z.B. Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Butadien, Isopren und Chloropren, Ethylen oder Propylen genannt. Aus Butadien oder Isopren erhaltene Polymere oder Copolymere können auch nachträglich hydriert werden.

Als Hauptmonomere bevorzugt sind Vinylester, vorzugsweise Vinylacetat, insbesondere auch in Kombination mit Ethylen (kurz Vinylacetat/Ethylen-Copolymere), Butadien, insbesondere auch in Kombination mit Styrol (kurz Butadien/Styrol-Copolymere) und die C₁- bis C₁₀-Alkyl(meth)acrylate, insbesondere C₁- bis C₈-Alkyl(meth)acrylate (kurz Polyacrylate) wobei Polyacrylate jeweils besonders bevorzugt sind.

Ganz besonders bevorzugt sind C₁ bis C₁₀ Alkyl(meth)acrylate als Hauptmonomere; genannt seien insbesondere Methylacrylat, Ethylacrylat, n-Butylacrylat, n-Hexylacrylat, Octylacrylat und 2-Etyhlhexylacrylat sowie Mischungen dieser Monomere. Das Emulsionspolymerisat besteht vorzugsweise zu mehr als 40 Gew. %, insbesondere zu mehr als 60 Gew. %, besonders bevorzugt zu mehr als 80 Gew. % aus C₁ - C₂₀ Alkyl(meth)-acrylaten.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z.B. auch Hydroxylgruppen enthaltende Monomere, insbesondere C₁-C₁₀-Hydroxyalkyl(meth)acrylate, (Meth)acrylamid und Ureidogruppen enthaltende Monomere wie Ureido(meth)acrylate.

Als weitere Monomere seien darüber hinaus Phenyloxyethylglykolmono-(meth) acrylat, Glycidylacrylat, Glycidylmethacrylat, Amino(meth)acrylate wie 2-Aminoethyl-(meth)-acrylat genannt. Monomere, die außer der Doppelbindung noch weitere funktionelle Gruppen tragen, z.B. Isocyanat-, Amino-, Hydroxy-, Amid- oder Glycidyl-, können z.B. die Haftung auf Substraten verbessern. In Betracht kommen insbesondere auch cyclische Lactame wie N-Vinylpyrrolidon oder N-Vinylcaprolactam.

Eine weitere Gruppe von erfindungsgemäß in der wässrigen Polymerdispersion dispergierten Polymeren sind Polyurethane, insbesondere bei Raumtemperatur (20 °C) adhäsive Polyurethane. In Betracht kommt vorzugsweise ein Polyurethan, das überwiegend aus Polyisocyanaten, insbesondere Diisocyanaten, und, als Reaktionspartner, Polyesterdiolen, Polyetherdiolen oder deren Gemische aufgebaut ist. Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut. Bevorzugt enthält das Polyurethan Polyesterdiole in einer Menge von mehr als 10 Gew.-%, besonders bevorzugt größer 30 Gew. %, insbesondere größer 40 Gew. % oder größer 50 Gew. %, ganz besonders bevorzugt größer 60 Gew. %, bezogen auf das Polyurethan. Insbesondere werden Polyesterdiole als Aufbaukomponenten verwendet. Falls Polyesterdiole im Gemisch mit Polyetherdiolen verwendet werden, handelt es sich vorzugsweise bei mindestens 50 mol %, besonders bevorzugt bei mindestens 80 mol %, ganz besonders bevorzugt bei 100 mol % des Gemischs von Polyester- und Polyetherdiolen um Polyesterdiole.

Insgesamt ist das Polyurethan vorzugsweise aufgebaut aus:
a) Diisocyanaten,
b) Diolen, von denen
   b1) 10 bis 100 mol-%, bezogen auf die Gesamtmenge der Diole (b), ein Molekulargewicht von 500 bis 5000 g/mol aufweisen,
   b2) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) optional weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) optional von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Bei der wässrigen Polymerdispersion bzw. bei dem wässrigen Bindemittel handelt es sich vorzugsweise um einen Klebstoff, besonders bevorzugt um einen Haftklebstoff. Unter dem Begriff Haftklebstoff wird dabei ein bei Raumtemperatur (20 °C) permanent klebriger Klebstoff verstanden. Merkmal eines Haftklebstoffs ist eine ausreichende Adhäsion (Klebrigkeit) verbunden mit einer notwendigen Kohäsion (innere Festigkeit in der Klebstoffschicht).

Die Glasübergangstemperatur (Tg) des Polymeren (Bindemittel) ist bei Klebstoffen im Allgemeinen kleiner oder gleich +15 °C, bei Haftklebstoffen im Allgemeinen vorzugsweise kleiner oder gleich 0 °C. Vorzugsweise beträgt die Tg -65 bis +10 °C, besonders bevorzugt -65 bis kleiner oder gleich 0 °C, ganz besonders bevorzugt -65 bis -10 °C, bzw. -65 bis -20 °C. Die Glasübergangstemperatur lässt sich bestimmen durch Differential Scanning Calorimetrie (ASTM D 3418-08, sogenannte "midpoint temperature").

Weiterhin enthält die wässrige Polymerdispersion thermisch expandierbare, thermoplastische Mikrosphären. Expandierbare thermoplastische Mikrosphären, die eine thermoplastische Polymerschale und ein darin eingeschlossenes Treibmittel umfassen, sind kommerziell erhältlich unter der Marke EXPANCEL®. In solchen Mikrosphären ist das Treibmittel in der Regel eine Flüssigkeit mit einem Siedepunkt nicht höher als die Erweichungstemperatur der thermoplastischen Polymerhülle. Die Erweichungstemperatur der Polymerhülle, normalerweise entsprechend seiner Glasübergangstemperatur Tg, liegt vorzugsweise innerhalb des Bereichs von 0 bis 140°C, am meisten bevorzugt von 30 bis 100 °C. Beim Erhitzen verdampft das Treibmittel und erhöht dabei den Innendruck und gleichzeitig erweicht die Schale, was zu einer erheblichen Vergrößerung der Mikrosphären führt. Die Temperatur, bei der die Expansion beginnt heißt Tstart, während die Temperatur, bei der die maximale Ausdehnung erreicht wird, als Tmax bezeichnet wird. Tstart für die expandierbaren Mikrokugeln ist bevorzugt von 40 bis 140°C, am meisten bevorzugt von 50 bis 100°C. Tmax der expandierbaren Mikrokugeln ist höher als Tstart und vorzugsweise von 80 bis 200°C, am meisten bevorzugt von 100 bis 170°C.

Expandierbare Mikrosphären sind in vielfältiger Form erhältlich, beispielsweise als trockene freifließende Partikel, als wässrige Slurry oder als teilweise entwässerte feuchte Kuchen. Expandierbare Mikrosphären können durch Polymerisieren von ethylenisch ungesättigten Monomeren in Gegenwart eines Treibmittels hergestellt werden. Detaillierte Beschreibungen von verschiedenen expandierbaren Mikrosphären und ihrer Herstellung findet sich z.B. in WO 2004/113613, WO 2007/142593 sowie in der dort zitierten Literatur.

Der Gehalt an expandierbaren Mikrosphären in der wässrigen Dispersion beträgt vorzugsweise 0,1 bis 20 Gew.%, insbesondere von 0,5 bis 10 Gew. %.

Der Gehalt an in den Mikrosphären eingeschlossenem Treibmittel ist vorzugsweise von 5 bis 50 Gew.%, oder von 10 bis 50 Gew.%, von 15 bis 40 Gew.% und besonders bevorzugt von 20 bis 35 Gew.%, bezogen auf die Masse der Mikrosphären. Das Treibmittel ist in der Regel eine Flüssigkeit mit einem Siedepunkt nicht höher als die Erweichungstemperatur der thermoplastischen Polymerschale und kann Kohlenwasserstoffe wie Propan, n-Pentan, Isopentan, Neopentan, Butan, Isobutan, Hexan, Isohexan, Neohexan, Heptan, Isoheptan, Octan oder Isooctan oder Mischungen davon umfassen. Abgesehen davon können auch andere Kohlenwasserstofftypen verwendet werden, wie Petrolether, oder chlorierte oder fluorierte Kohlenwasserstoffe wie Methylchlorid, Methylenchlorid, Dichlorethan, Dichlorethylen, Trichlorethan, Trichlorethylen, Trichlorfluormethan, perfluorierte Kohlenwasserstoffe usw. Bevorzugte Treibmittel umfassen Isobutan, allein oder in Mischung mit einem oder mehreren anderen Kohlenwasserstoffen. Der Siedepunkt bei Normaldruck liegt vorzugsweise im Bereich von etwa -50 bis etwa 100 °C, am meisten bevorzugt von etwa -20 bis etwa 50 °C, insbesondere von etwa -20 bis etwa 30 °C.

Die Partikelgröße der nicht expandierten Mikrosphären, dargestellt als Volumenmedian D(0,5), beträgt vorzugsweise von1 bis 500 µm, vorzugsweise von 5 bis 100 µm oder von 5 bis 40 µm. Die Partikelgröße kann bestimmt werden z.B. durch Laserlichtstreuung. Der Begriff expandierbare Mikrosphären bezieht sich auf expandierbare Mikrosphären, die zuvor nicht erweitert wurden, d.h. auf nicht expandierte, expandierbare Mikrokügelchen.

Die Mikrosphären können in verschiedenen Applikationsformen der Polymerdispersion zugesetzt werden. Beispielsweise in getrockneter Form mit einem Feststoffgehalt von vorzugsweise größer 95 Gew.% oder in nicht vollständig getrockneter, feuchter Form mit einem Feststoffgehalt von vorzugsweise 55 bis 85 Gew.% oder in Form einer wässrigen Aufschlämmung (slurry) mit einem Feststoffgehalt von vorzugsweise 5 bis 55 Gew.% oder von 35 bis 50 Gew.%.

Die thermoplastische Polymerhülle der expandierbaren Mikrokugeln kann aus einem oder mehreren Homo- oder Copolymeren gebildet werden, die durch Polymerisieren von ethylenisch ungesättigten Monomeren erhältlich sind. Hierfür geeignete Monomere sind z.B. Acrylsäureester, wie Methylacrylat oder Ethylacrylat; Methacrylsäureester wie Methylmethacrylat, Isobornylmethacrylat oder Ethylmethacrylat; Nitrilgruppen enthaltende Monomere, wie Acrylnitril, Methacrylnitril, alpha-Chloracrylnitril, alpha-Ethoxyacrylnitril, Fumaronitril oder Crotonitril; Vinylhalogenide wie Vinylchlorid; Vinylester wie Vinylacetat; Vinylpyridin; Vinylidenhalogenide, wie Vinylidenchlorid; Styrole wie Styrol, halogenierte Styrole oder alpha-Methylstyrol; Diene, wie Butadien, Isopren oder Chloropren; Vinylether, insbesondere solche mit nur einer C-C-Doppelbindung. Beispiele von Vinylethern beinhalten Alkylvinylether, die Alkylgruppe bevorzugt mit 1 bis 10 C-Atomen, am meisten bevorzugt von 1 bis 5 C-Atomen, z.B. Methylvinylether, Ethylvinylether, Propylvinylether, Isopropylvinylether, Butylvinylether, Isobutylvinylether, tert-Butylvinylether, sec.-Butylvinylether und deren Mischungen, von denen Methylvinylether und Ethylvinylether besonders bevorzugt sind. Ein oder mehrere Wasserstoffatome an der Alkylgruppe kann mit einer funktionellen Gruppe, wie Hydroxy, Carbonsäure, Amin, Ether etc. substituiert sein, z.B. Ethylenglykolvinylether. Beliebige Gemische der oben genannten Monomeren können ebenfalls verwendet werden.

Vorzugsweise umfassen die Monomere mindestens ein (Meth)acrylsäureestermonomer, am meisten bevorzugt mindestens einen Methacrylsäureester wie Methylmethacrylat. Die Menge davon in der Polymerhülle ist vorzugsweise von etwa 0,1 bis etwa 80 Gew.%, am meisten bevorzugt von etwa 1 bis etwa 25 Gew.% der Gesamtmenge der Monomeren. Vorzugsweise umfassen die Monomere auch mindestens ein Vinylidenhalogenid, am meisten bevorzugt Vinylidenchlorid. Die Menge davon in der Polymerhülle ist vorzugsweise von etwa 1 bis etwa 90 Gew.%, am meisten bevorzugt von etwa 20 bis etwa 80 Gew.% der Gesamtmenge der Monomeren. Am meisten bevorzugt umfassen die Monomere sowohl mindestens ein (Meth)acrylestermonomer und mindestens ein Vinylidenhalogenidmonomer. Vorzugsweise umfassen die Monomere mindestens ein Nitril enthaltendes Monomer, am meisten bevorzugt mindestens eines ausgewählt aus Acrylnitril und Methacrylnitril, insbesondere Acrylnitril. Die Menge davon in der Polymerhülle ist vorzugsweise von etwa 1 bis etwa 80 Gew.%, am meisten bevorzugt von etwa 20 Gew.% bis etwa 70 Gew.% der Gesamtmenge der Monomeren.

In einer vorteilhaften Ausführungsform umfassen die Monomere mindestens ein Acrylestermonomer, mindestens ein Vinylidenhalogenid und mindestens ein Nitril enthaltendes Monomer. Das Polymer der Schale kann z.B. ein Copolymer sein, erhältlich aus Monomeren umfassend Methylmethacrylat in einer bevorzugten Menge von etwa 0,1 bis etwa 80 Gew.%, am meisten bevorzugt von etwa 1 bis etwa 25 Gew.% der Gesamtmenge der Monomere, Vinylidenchlorid in einer bevorzugten Menge von etwa 1 bis etwa 90 Gew.%, am meisten vorzugsweise von etwa 20 bis etwa 80 Gew.% der Gesamtmenge der Monomeren und Acrylnitril in einer bevorzugten Menge von etwa 1 bis etwa 80 Gew.%, am meisten bevorzugt von etwa 20 bis etwa 70 Gew.% der Gesamtmenge der Monomeren. Für die Polymerhülle geeignet sind auch Copolymere aus Monomeren umfassend 20 bis 80 Gew.% Acrylnitril und 1 bis 70 Gew.% Vinylether mit nur einer C-C-Doppelbindung, wobei die Gesamtmenge des Acrylnitrils und des Vinylethers von 30 bis 100 Gew.%, vorzugsweise von 50 bis 100 Gew.% oder von 65 bis 100 Gew.% der ethylenisch ungesättigten Monomere beträgt. Die ethylenisch ungesättigten Monomere umfassen vorzugsweise von 1 bis 60 Gew.%, 1 bis 50 Gew.%, 5 bis 50 Gew.% oder 5 bis 30 Gew.% Vinylether mit nur einer C-C-Doppelbindung sowie vorzugsweise von 40 bis 80 Gew.%, am meisten bevorzugt von 50 bis 70 Gew.% Acrylnitril sowie vorzugsweise ferner Methacrylnitril, bevorzugt in einer Menge von 1 bis 50 Gew.%, am meisten bevorzugt von 5 bis 40 ist, und vorzugsweise ferner einen oder mehrere Ester der Acrylsäure, Ester der Methacrylsäure und Mischungen davon, bevorzugt in einer Menge von 1 bis 50 Gew.%, vorzugsweise von 5 bis 40 Gew.%.

Vorzugsweise ist die Schale der Mikrosphären gebildet aus einem Copolymer aus ethylenisch ungesättigten Monomeren umfassend mindestens ein Monomer ausgewählt aus (Meth)acrylsäureestermonomeren, Vinylidenhalogenidmonomeren, Acrylnitril und Vinylethermonomeren. Besonders bevorzugt sind Copolymere aus Monomeren umfassend Alkyl(meth)acrylat, Vinylidenchlorid und Acrylnitril oder Copolymere aus Monomeren umfassend mindestens ein Vinylethermonomer und Acrylnitril.

Die Monomere für die Polymerhülle können auch vernetzende multifunktionelle Monomere umfassen, wie z.B. Divinylbenzol, Ethylenglykoldi(meth)acrylat, Di(ethylenglycol)di(meth)acrylat, Triethylenglykoldi(meth)acrylat, Propylenglykoldi(meth)acrylat, 1,4-Butandiol-di(meth)acrylat, 1,6-Hexandiol-di(meth)acrylat, Glycerin-di(meth)acrylat, 1,3-Butandiol-di (meth)acrylat, Neopentylglykoldi(meth)acrylat, 1,10-Decandiol(meth)-acrylat, Pentaerythrittri(meth)acrylat, Pentaerythrittetra(meth)acrylat, Dipentaerythritol-hexa(meth)acrylat, Triallylformaltri(meth)acrylat, Allyl(meth)acrylat, Trimethylolpropan-tri(meth)acrylat, Tributanedioldi(meth)acrylat, PEG-200-di(meth)acrylat, PEG-400-di-(meth)acrylat, PEG-600-di(meth)acrylat, 3-Acryloyloxyglycolmonoacrylat, Triacrylformal, Triallylisocyanat, Triallylisocyanurat, Divinylether, Ethylenglykoldivinylether, Diethylenglykoldivinylether, Triethylenglykoldivinylether, Tetraethylenglykoldivinylether etc. Besonders bevorzugte vernetzende Monomere sind mindestens trifunktionell, z.B. Pentaerythrittri(meth)acrylat, Pentaerythrittetra(meth)acrylat, Dipentaerythritolhe-xa(meth)acrylat, Triallylformal-tri(meth)acrylat, Trimethylolpropan-tri(meth)acrylat, Triacrylformal, Triallylisocyanat und Triallylisocyanurat. Die Menge an vernetzenden funktionellen Monomeren kann z.B. von 0,1 bis 10 Gew.%, oder 0,1 bis 1 Gew.%, oder 0,2 bis 0,5 Gew.%; bzw. von 1 bis 3 Gew.% der ethylenisch ungesättigten Monomeren sein, wobei 0,1 bis 1 Gew.% insbesondere bei mindestens trifunktionellen Monomeren bevorzugt ist und 1 bis 3 Gew.% bei difunktionellen Monomeren bevorzugt ist.

Abgesehen von der Polymerhülle und dem Treibmittel können die Mikrosphären weitere Stoffe umfassen, die z.B. während ihrer Herstellung zugesetzt wurden; in der Regel in einer Menge von 0 bis 20 Gew.%, vorzugsweise von 1 bis 10 Gew.%. Beispiele solcher Substanzen sind feste Suspensionsmittel, wie beispielsweise eine oder mehrere Stoffe ausgewählt aus Stärke, vernetzte Polymere, Gummi agar, derivatisierte Cellulose, wie z.B. Methylcellulose, Hydroxypropylmethylcellulose, Carboxymethylcellulose und Hydroxyethylcellulose, Kieselsäure, kolloidale Tone wie beispielsweise Kreide und Bentonit, und/oder ein oder mehrere Salze, Oxide oder Hydroxide von Metallen wie Al, Ca, Mg, Ba, Fe, Zn, Ni und Mn, z.B. ein oder mehrere Stoffe ausgewählt aus Calciumphosphat, Calciumcarbonat, Magnesiumhydroxid, Bariumsulfat, Calciumoxalat und Hydroxiden von Aluminium, Eisen, Zink, Nickel oder Mangan. Falls vorhanden, sind diese festen Suspendiermittel normalerweise hauptsächlich an der äußeren Oberfläche der Polymerschale angeordnet.

Vorzugsweise sind die expandierbaren Mikrosphären dadurch gekennzeichnet, dass die Mikrosphären eine Schale aus thermoplastischem Polymer und darin eingeschlossenem Treibmittel, vorzugsweise Isobutan, aufweisen, wobei in den Mikrosphären vorzugsweise 17 bis 40 Gew.% Treibmittel eingeschlossen ist und die Mikrosphären in nicht expandiertem Zustand eine Partikelgröße (Volumenmedian D(0,5)) von 5 bis 40 µm aufweisen.

Die wässrige Polymerdispersion (Beschichtungsmasse), insbesondere der wässrige Haftklebstoff kann allein aus dem in Wasser dispergierten Polymer (Bindemittel) und den Mikrosphären bestehen, kann aber auch noch weitere Zusatzstoffe enthalten. In Betracht kommen bei Haftklebstoffen z.B. sogenannte klebrigmachende Harze (Tackifier). Tackifier sind z. B. Naturharze, wie Kolophoniumharze und deren durch Disproportionierung oder Isomerisierung, Polymerisation, Dimerisation, Hydrierung entstehenden Derivate. Die Säuregruppen dieser Harze können in ihrer Salzform (mit z.B. ein- oder mehrwertigen Gegenionen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Bevorzugte Tackifier sind natürliche oder chemisch modifizierte Kolophoniumharze. Kolophoniumharze bestehen zum überwiegenden Teil aus Abietinsäure oder Abietinsäurederivaten. Weitere Zusätze zur Erhöhung der Klebrigkeit (Tackifier) sind niedermolekulare Polymere wie z.B. säurehaltige Polyacrylate mit Glastemperaturen im Bereich von -60 bis -20 °C. Die als Tackifier verwendbaren niedermolekularen Polymere haben ein gewichtsmittleres Molekulargewicht von vorzugsweise kleiner als 500000, vorzugsweise von 1500 bis 45000 oder von 2000 bis 20000 und können beispielsweise in Form eines 100%-Systems zu der Polymerdispersion dazu gegeben werden. Die Tackifier sind vorzugsweise in Mengen von 1 bis 40 Gew.%, insbesondere von 5 bis 30 Gew.% in der wässrigen Polymerdispersion enthalten. Weitere Additive, welche in der wässrigen Dispersion enthalten sein können, sind z. B. Antioxidantien, Füllstoffe, Farbstoffe, Verlaufshilfsmittel und Weichmacher.

Bevorzugte Polymerdispersionen sind dadurch gekennzeichnet, dass der Gehalt an dispergiertem Polymer in der Polymerdispersion von 20 bis 75 Gew.%, vorzugsweise 40 bis 70 Gew.% beträgt, der Gehalt an den Mikrosphären in der Polymerdispersion von 0,1 bis 20 Gew.%, vorzugsweise 0,5 bis 10 Gew.% beträgt und der Gesamtfeststoffgehalt der wässrigen Polymerdispersion 30 bis 80 Gew. %, vorzugsweise 40,5 bis 80 Gew.% oder 45 bis 75 Gew. % beträgt. Das entspricht einem Wassergehalt von 20 bis 70 Gew.%, bzw. von 20 bis 59,5 Gew. % bzw. von 25 bis 55 Gew. %.

Die Viskosität der Beschichtungsmasse vor Koagulation beträgt insbesondere 50 bis 3000 mPas, besonders bevorzugt 100 bis 2000 mPas. Viskositäten werden nach DIN EN ISO 3219 (23 °C, 250 1/s) gemessen.

Zum Induzieren der Koagulation werden die wässrigen Polymerdispersionen erwärmt Besonders bevorzugt ist eine gleichzeitige Erwärmung und Scherung. Erwärmung erfolgt vorzugsweise auf eine Temperatur von 50 bis 150 °C, vorzugsweise 60 bis 110 °C. Dabei ist die Temperatur größer oder gleich Tₛₜₐᵣₜ der expandierenden Mikrosphären. Das Erwärmen kann erfolgen durch den Durchfluss durch eine beheizbare Ausbringöffnung, insbesondere durch eine beheizbare Düse oder durch das Einleiten von erwärmten Gasen, insbesondere von erwärmter Luft oder von Wasserdampf.

Bei Scherung sind die Scherraten vorzugsweise in einem Bereich von 100 bis 500.000 1/s. Die Scherung kann erfolgen durch das Durchleiten durch einen Mikrokanal mit Durchmessern von vorzugsweise 0,5 bis 10 mm.

Gegenstand der Erfindung ist auch ein Verfahren, wobei eine Polymerdispersion in koagulierter Form auf mindestens ein Substrat aufgetragen wird bzw. wobei mindestens ein Substrat mit erfindungsgemäß koagulierter Polymerdispersion beschichtet wird. Vorzugsweise handelt es sich bei der Polymerdispersion um eine Klebstoffdispersion, welche vorzugsweise in Strangform auf mindestens ein Substrat aufgetragen wird. Vorzugsweise erfolgt das Auftragen der koagulierten Beschichtungsmasse mit einer Düse. Die Beschichtung erfolgt vorzugsweise in einem kontinuierlichen Prozess. Bei den Substraten bzw. den Trägermaterialien kann es sich vorzugsweise um Papier, Pappe oder Karton handeln.

In einem bevorzugten Verfahren ist die Polymerdispersion eine Klebstoffdispersion, welche in koagulierter Form auf einen verschließbaren Bereich einer Kartonverpackung aufgetragen wird und die Kartonverpackung mittels der aufgetragenen, koagulierten Klebstoffdispersion verschlossen wird.

Gegenstand der Erfindung ist auch die Verwendung von thermisch expandierbaren, thermoplastischen Mikrosphären zur Koagulation von wässrigen Polymerdispersionen, gemäss Anspruch 16.

Durch das erfindungsgemäße Verfahren ergeben sich folgende Vorteile:

Durch die Koagulation der Polymerdispersion erfolgt ein schneller Aufbau der Klebkräfte, der im Bereich derjenigen von Hotmelt-Systemen liegt. Über konventionelle Auftragssysteme von wässrigen Haftklebstoffdispersionen ist dies nicht möglich, so dass Haftklebstoffdispersionen bisher nicht im Kartonverschluss angewendet werden können.

### Beispiele

### Einsatzstoffe:

PD 1: Wässrige Dispersion eines Acrylsäureester-Copolymers, hergestellt mittels zweistufiger Emulsionspolymerisation, wobei zunächst 80 Gew.-Teile einer Monomeremulsion 1 und anschließend 20 Gew.-Teile einer Monomeremulsion 2 polymerisiert werden.
   Monomeremulsion 1: bestehend aus 90 Gew.-Teilen n-Butylacrylat, 2 Gew.-teilen Hydroxypropylacrylat, 6,4 Gew.-Teilen Methylmethacrylat und 1,6 Gew.-Teilen Acrylsäure
   Monomeremulsion 2: bestehend aus 86,5 Gew.-Teilen n-Butylacrylat, 2 Gew.-Teilen Hydroxypropylacrylat, 3,6 Gew.-Teilen Glycidylmethacrylat, 6,3 Gew.-Teilen Methylmethacrylat und 1,6 Gew.-Teilen Acrylsäure Feststoffgehalt = 61,9%, Tg = -35°C
Polymer 1: acResin ® 3500; Carboxylgruppenhaltiger Poly(acrylsäure-n-butylester), K-Wert ca. 11-16, Feststoffgehalt = 100%
Expancel® 031 DU 40 trockene, unexpandierte, expandierbare Mikrosphären, Teilchengröße D(0,5) 10-16 µm; Tstart 80-95 °C; Tmax 120-135 °C

Es werden Mischungen aus den wässrigen Polymerdispersionen und den expandierbaren Mikroteilchen hergestellt. Die Mischungen werden mittels Durchleitung durch eine beheizbare Kapillare gleichzeitig erwärmt und geschert. Erwärmt wird auf maximal 120 °C. Die Kapillare hat einen Durchmesser von 1 mm und eine Länge von 175 mm. Die Scherrate beträgt 150 1/s.

Dabei koaguliert die Dispersion, was sich durch Ausbilden eines extrudierbaren Stranges zeigt. Besonders vorteilhaft ist, dass sich ein Strang (in Raupenform) ausbildet, der trotz des verbleibenden Restwassers sowohl eine Adhäsion zum Papier bzw. Karton als auch eine innere Kohäsion aufbaut, wodurch den Rückstellkräften beim Kartonverschluss entgegen gewirkt wird.

Klebetest: Bei einem Strangaustrag erfolgt eine Applikation auf einem Testpapier, gegen das ein weiteres Papier mit etwa 10 N/cm² angedrückt wird. Nach ca. 3-5 Sekunden wird die Klebung gelöst. Bei guter Adhäsion und schnellem Aufbau der inneren Kohäsion ist ein Papierriss zu erkennen.

Die Ergebnisse sind in der folgenden Tabelle zusammengefasst.

**Tabelle 1: Prüfergebnisse von Polymerdispersionen**

| Beispiel | Zusammensetzung | Temperatur an der Kapillare | Ergebnis |
|---|---|---|---|
| 1 (Vergleich) | PD1 | 117°C | Keine Koagulation keine Strangbildung |
| | 0 Gew.% Mikrosphären | | |
| 2 | PD1 | 104°C | Koagulation, Strangbildung, etwas Papiereinriss |
| | 1 Gew.% Mikrosphären | | |
| 3 | PD1 | 91°C | Koagulation, Strangbildung, Papiereinriss |
| | 1 Gew.% Mikrosphären | | |
| | 10 Gew.% Polymer 1 | | |

Die Ergebnisse zeigen, dass die erfindungsgemäßen Beispiele 2 und 3 einen Strangaustrag ermöglichen und der erzeugte Strang darüber hinaus auch eine Klebkraft aufbauen kann, so dass die Verklebung von Papier ermöglicht wird. Das nicht erfindungsgemäße Beispiel 1 koaguliert dagegen nicht und ergibt keinen Strang.

## Patentansprüche

1. Verfahren zur Koagulation einer wässrigen Polymerdispersion, wobei
- eine wässrige Polymerdispersion zur Verfügung gestellt wird, welche mindestens ein in wässriger Phase dispergiertes Polymer sowie thermisch expandierbare, thermoplastische Mikrosphären enthält,
- die Polymerdispersion durch Energieeintrag koaguliert wird, und
- die koagulierte Masse über eine Ausbringöffnung, vorzugsweise in Form einer Düse, ausgetragen wird, wobei der Energieeintrag zur Koagulation thermisch oder thermisch und durch Scherung erfolgt.

2. Verfahren gemäß dem vorhergehenden Anspruch, **dadurch gekennzeichnet, dass** es sich bei dem dispergierten Polymer um ein Emulsionspolymerisat oder um ein Polyurethan handelt.

3. Verfahren gemäß einem der vorhergehenden Ansprüche, **dadurch gekennzeichnet, dass** das dispergierte Polymer zu mehr als 40 Gew. % aus C₁-C₂₀ Alkyl-(meth)acrylaten besteht.

4. Verfahren gemäß einem der vorhergehenden Ansprüche, **dadurch gekennzeichnet, dass** das dispergierte Polymer eine Glasübergangstemperatur kleiner oder gleich 0 °C hat.

5. Verfahren gemäß einem der vorhergehenden Ansprüche, **dadurch gekennzeichnet, dass** es sich bei der wässrigen Polymerdispersion um einen Klebstoff, insbesondere um einen Haftklebstoff handelt.

6. Verfahren gemäß einem der vorhergehenden Ansprüche, **dadurch gekennzeichnet, dass** die wässrige Polymerdispersion mindestens einen Tackifier in einer Menge von vorzugsweise 1 bis 40 Gew.% enthält.

7. Verfahren gemäß einem der vorhergehenden Ansprüche, **dadurch gekennzeichnet, dass** der Gehalt an dispergiertem Polymer in der Polymerdispersion von 20 bis 75 Gew.% beträgt, der Gehalt an den Mikrosphären in der Polymerdispersion von 0,1 bis 20 Gew.% beträgt und der Gesamtfeststoffgehalt der wässrigen Polymerdispersion vorzugsweise 30 bis 80 Gew. % beträgt.

8. Verfahren gemäß einem der vorhergehenden Ansprüche, **dadurch gekennzeichnet, dass** die Mikrosphären eine Schale aus thermoplastischem Polymer und darin eingeschlossenem Treibmittel, vorzugsweise Isobutan, aufweisen, wobei die Mikrosphären in nicht expandiertem Zustand eine Partikelgröße mit einem Volumenmedian D(0,5) von 5 bis 40 µm aufweisen.

9. Verfahren gemäß einem der vorhergehenden Ansprüche, **dadurch gekennzeichnet, dass** die Schale der Mikrosphären gebildet ist aus einem Copolymer aus ethylenisch ungesättigten Monomeren umfassend mindestens ein Monomer ausgewählt aus (Meth)acrylsäureestermonomeren, Vinylidenhalogenidmonomeren, Acrylnitril und Vinylethermonomeren.

10. Verfahren gemäß einem der vorhergehenden Ansprüche, **dadurch gekennzeichnet, dass** die Schale der Mikrosphären gebildet ist aus einem Copolymer aus Monomeren umfassend Alkyl(meth)acrylat, Vinylidenchlorid und Acrylnitril oder aus Monomeren umfassend mindestens ein Vinylethermonomer und Acrylnitril.

11. Verfahren gemäß einem der vorhergehenden Ansprüche, **dadurch gekennzeichnet, dass** die Mikrosphären eine Expansionsstarttemperatur Tₛₜₐᵣₜ aufweisen von 40 bis 140°C und eine Temperatur maximaler Expansion Tₘₐₓ welche höher liegt als Tₛₜₐᵣₜ und im Bereich von 80 bis 200 °C liegt.

12. Verfahren gemäß einem der vorhergehenden Ansprüche, **dadurch gekennzeichnet, dass** die Koagulation thermisch erfolgt durch Erwärmen auf eine Temperatur von 50 bis 150 °C, vorzugsweise 60 bis 110 °C, oder dass die Koagulation thermisch erfolgt durch Erwärmen auf eine Temperatur von 50 bis 150 °C, vorzugsweise 60 bis 110 °C, und gleichzeitig durch Scherung mit Scherraten von 100 bis 500000 1/s.

13. Verfahren gemäß einem der vorhergehenden Ansprüche, **dadurch gekennzeichnet, dass** die koagulierte Masse auf mindestens ein Substrat aufgetragen wird.

14. Verfahren gemäß dem vorhergehenden Anspruch, **dadurch gekennzeichnet, dass** die Polymerdispersion eine Klebstoffdispersion ist, welche in koagulierter Form auf mindestens ein Substrat, ausgewählt aus Papier, Pappe und Karton aufgetragen wird.

15. Verfahren gemäß einem der beiden vorhergehenden Ansprüche, **dadurch gekennzeichnet, dass** die Polymerdispersion eine Klebstoffdispersion ist, welche in koagulierter Form auf einen verschließbaren Bereich einer Kartonverpackung aufgetragen wird und die Kartonverpackung mittels der aufgetragenen, koagulierten Klebstoffdispersion verschlossen wird.

16. Verwendung von thermisch expandierbaren, thermoplastischen Mikrosphären zur Koagulation von wässrigen Polymerdispersionen, wobei der Energieeintrag zur Koagulation thermisch oder thermisch und durch Scherung erfolgt.

## Claims

1. A method for coagulating an aqueous polymer dispersion, by
- providing an aqueous polymer dispersion which comprises at least one polymer in dispersion in aqueous phase and also comprises thermally expandable, thermoplastic microspheres,
- coagulating the polymer dispersion by energy input, and
- delivering the coagulated composition via an outlet aperture, preferably in the form of a nozzle, where the energy for the coagulation is input thermally or thermally and by shearing.

2. The method according to the preceding claim, wherein the dispersed polymer is an emulsion polymer or a polyurethane.

3. The method according to either of the preceding claims, wherein the dispersed polymer consists to an extent of more than 40 wt% of C₁-C₂₀ alkyl (meth)acrylates.

4. The method according to any of the preceding claims, wherein the dispersed polymer has a glass transition temperature of less than or equal to 0°C.

5. The method according to any of the preceding claims, wherein the aqueous polymer dispersion is an adhesive, more particularly a pressure-sensitive adhesive.

6. The method according to any of the preceding claims, wherein the aqueous polymer dispersion comprises at least one tackifier in an amount of preferably 1 to 40 wt%.

7. The method according to any of the preceding claims, wherein the amount of dispersed polymer in the polymer dispersion is from 20 to 75 wt%, the amount of the microspheres in the polymer dispersion is from 0.1 to 20 wt%, and the total solids content of the aqueous polymer dispersion is preferably 30 to 80 wt%.

8. The method according to any of the preceding claims, wherein the microspheres have a shell of thermoplastic polymer with blowing agent, preferably isobutane, enclosed therein, the microspheres in the unexpanded state having a particle size with a volume median D(0.5) of 5 to 40 µm.

9. The method according to any of the preceding claims, wherein the shell of the microspheres is formed from a copolymer of ethylenically unsaturated monomers comprising at least one monomer selected from (meth)acrylic ester monomers, vinylidene halide monomers, acrylonitrile, and vinyl ether monomers.

10. The method according to any of the preceding claims, wherein the shell of the microspheres is formed from a copolymer of monomers comprising alkyl (meth)acrylate, vinylidene chloride, and acrylonitrile, or of monomers comprising at least one vinyl ether monomer and acrylonitrile.

11. The method according to any of the preceding claims, wherein the microspheres have an expansion start temperature Tₛₜₐᵣₜ of 40 to 140°C and a maximum expansion temperature Tₘₐₓ which is higher than Tₛₜₐᵣₜ and is in the range from 80 to 200°C.

12. The method according to any of the preceding claims, wherein the coagulation takes place thermally by heating to a temperature of 50 to 150°C, preferably 60 to 110°C, or wherein the coagulation takes place thermally by heating to a temperature of 50 to 150°C, preferably 60 to 110°C, and simultaneously by shearing with shear rates of 100 to 500 000 1/s.

13. The method according to any of the preceding claims, wherein the coagulated composition is applied to at least one substrate.

14. The method according to the preceding claim, wherein the polymer dispersion is an adhesive dispersion which is applied in coagulated form to at least one substrate selected from paper, board, and cardboard.

15. The method according to either of the two preceding claims, wherein the polymer dispersion is an adhesive dispersion which is applied in coagulated form to a sealable region of a cardboard pack and the cardboard pack is sealed by means of the applied, coagulated adhesive dispersion.

16. The use of thermally expandable, thermoplastic microspheres for coagulating aqueous polymer dispersions, where the energy for the coagulation is input thermally or thermally and by shearing.

## Revendications

1. Procédé de coagulation d'une dispersion aqueuse de polymère, dans lequel
- une dispersion aqueuse de polymère est mise à disposition, qui contient au moins un polymère dispersé dans une phase aqueuse, ainsi que des microsphères thermoplastiques, expansibles thermiquement,
- la dispersion de polymère est coagulée par apport d'énergie, et
- la masse coagulée est déchargée par une ouverture d'évacuation, de préférence sous la forme d'une buse, l'apport d'énergie pour la coagulation ayant lieu thermiquement ou thermiquement et par cisaillement.

2. Procédé selon la revendication précédente, **caractérisé en ce que** le polymère dispersé consiste en un polymère en émulsion ou en un polyuréthane.

3. Procédé selon l'une quelconque des revendications précédentes, **caractérisé en ce que** le polymère dispersé est constitué par plus de 40 % en poids de (méth)acrylates d'alkyle en C₁-C₂₀.

4. Procédé selon l'une quelconque des revendications précédentes, **caractérisé en ce que** le polymère dispersé présente une température de transition vitreuse inférieure ou égale à 0 °C.

5. Procédé selon l'une quelconque des revendications précédentes, **caractérisé en ce que** la dispersion aqueuse de polymère consiste en un adhésif, notamment en un adhésif sensible à la pression.

6. Procédé selon l'une quelconque des revendications précédentes, **caractérisé en ce que** la dispersion aqueuse de polymère contient au moins un agent collant en une quantité de préférence de 1 à 40 % en poids.

7. Procédé selon l'une quelconque des revendications précédentes, **caractérisé en ce que** la teneur en polymère dispersé dans la dispersion de polymère est de 20 à 75 % en poids, la teneur en microsphères dans la dispersion de polymère est de 0,1 à 20 % en poids, et la teneur totale en solides de la dispersion aqueuse de polymère est de préférence de 30 à 80 % en poids.

8. Procédé selon l'une quelconque des revendications précédentes, **caractérisé en ce que** les microsphères comprennent une enveloppe en polymère thermoplastique et un agent gonflant enfermé dans celle-ci, de préférence l'isobutane, les microsphères présentant à l'état non expansé une taille de particule ayant une médiane volumique D(0,5) de 5 à 40 µm.

9. Procédé selon l'une quelconque des revendications précédentes, **caractérisé en ce que** l'enveloppe des microsphères est formée par un copolymère de monomères éthyléniquement insaturés comprenant au moins un monomère choisi parmi les monomères esters de l'acide (méth)acrylique, les monomères halogénures de vinylidène, l'acrylonitrile et les monomères éthers de vinyle.

10. Procédé selon l'une quelconque des revendications précédentes, **caractérisé en ce que** l'enveloppe des microsphères est formée par un copolymère de monomères comprenant le (méth)acrylate d'alkyle, le chlorure de vinylidène et l'acrylonitrile, ou de monomères comprenant au moins un monomère éther de vinyle et l'acrylonitrile.

11. Procédé selon l'une quelconque des revendications précédentes, **caractérisé en ce que** les microsphères présentent une température de début d'expansion T_{début} de 40 à 140 °C et une température d'expansion maximale Tₘₐₓ qui est supérieure à T_{début} et se situe dans la plage allant de 80 à 200 °C.

12. Procédé selon l'une quelconque des revendications précédentes, **caractérisé en ce que** la coagulation a lieu thermiquement par chauffage à une température de 50 à 150 °C, de préférence de 60 à 110 °C, ou **en ce que** la coagulation a lieu thermiquement par chauffage à une température de 50 à 150 °C, de préférence de 60 à 110 °C, et simultanément par cisaillement avec des taux de cisaillement de 100 à 500 000 1/s.

13. Procédé selon l'une quelconque des revendications précédentes, **caractérisé en ce que** la masse coagulée est appliquée sur au moins un substrat.

14. Procédé selon la revendication précédente, **caractérisé en ce que** la dispersion de polymère est une dispersion d'adhésif, qui est appliquée sous forme coagulée sur au moins un substrat, choisi parmi le papier, le papier cartonné et le carton.

15. Procédé selon l'une quelconque des deux revendications précédentes, **caractérisé en ce que** la dispersion de polymère est une dispersion d'adhésif, qui est appliquée sous forme coagulée sur une zone pouvant être fermée d'un emballage en carton, et l'emballage en carton est fermé au moyen de la dispersion d'adhésif coagulée appliquée.

16. Utilisation de microsphères thermoplastiques expansibles thermiquement pour la coagulation de dispersions aqueuses de polymères, dans laquelle l'apport d'énergie pour la coagulation a lieu thermiquement ou thermiquement et par cisaillement.
